# EUROPÄISCHE PATENTSCHRIFT

(11) **EP 1 292 459 B1**
(45) Veröffentlichungstag und Bekanntmachung des Hinweises auf die Patenterteilung: **14.09.2005**
(21) Anmeldenummer: 01943464.6
(22) Anmeldetag: 01.06.2001
(51) Int. Cl.: B60J 7/057, G05B 19/401, G05B 19/21

(54) **VERFAHREN ZUM BESTIMMEN DER POSITION EINES DURCH DIE ANTRIEBSWELLE EINES GLEICHSTROMMOTORS ANGETRIEBENEN ELEMENTS**
METHOD FOR DETERMINING THE POSITION OF AN ELEMENT DRIVEN BY THE DRIVE SHAFT OF A DIRECT CURRENT MOTOR
PROCEDE POUR LA DETERMINATION DE LA POSITION D'UN ELEMENT ENTRAINE PAR L'ARBRE D'ENTRAINEMENT D'UN MOTEUR A COURANT CONTINU

(30) Priorität: 06.06.2000 DE 10028041
(43) Veröffentlichungstag der Anmeldung: 19.03.2003
(73) Patentinhaber: Leopold Kostal GmbH & Co. KG, 58507 Lüdenscheid (DE)
(72) Erfinder: KRAMER, Detlef, 58239 Schwerte (DE); OTTE, Stefan, 58452 Witten (DE); KOCK, Cassian, 45721 Haltern (DE)
(86) Internationale Anmeldenummer: PCT/EP2001/006220
(87) Internationale Veröffentlichungsnummer: WO 2001/094140

(56) Entgegenhaltungen:
- WO-A-98/52784
- DE-A- 19 619 971
- US-A- 5 483 135
- PATENT ABSTRACTS OF JAPAN vol. 1998, no. 10, 31. August 1998 (1998-08-31) & JP 10 136677 A (MATSUSHITA ELECTRIC WORKS LTD), 22. Mai 1998 (1998-05-22)

## Beschreibung

Die Erfindung betrifft ein Verfahren zum Bestimmen der Position eines durch die Antriebswelle eines Gleichstrommotors angetriebenen Elements innerhalb einer vorbestimmten Bewegungsstrecke zwischen zwei Blockpositionen durch Auswerten der im Ankerstromsignal enthaltenen Stromrippel.

Das Ankerstromsignal eines Gleichstrommotors umfaßt einen sogenannten Gleichanteil sowie einen den Gleichanteil überlagemden Wechselanteil. Der Wechselanteil entsteht bei einem Betrieb des Gleichstrommotors infolge des Zusammenwirkens von Magnet (Feld), Ankerwicklung und Kommutator des Gleichstrommotors. Dies äußert sich in einer kurzzeitigen Änderung der induzierten Spannung, woraus sich die Welligkeit des Ankerstromsignals ergibt. Die in dem Ankerstromsignal enthaltenen, in der beschriebenen Weise bedingten Stromspitzen - im folgenden Stromrippel genannt - treten bei einer Umdrehung des Ankers in einer der Anzahl der Kollektorlamellen entsprechenden Häufigkeit auf. Weist beispielsweise der Anker 10 Kollektorlamellen auf, sind im Ankerstromsignal entsprechend 10 Stromrippel zu erkennen. Eine Zählung der Stromrippel kann somit Aufschluß über die aktuelle Drehstellung des Ankers des Gleichstrommotors und somit bezüglich des angetriebenen Elements innerhalb seiner vorbestimmten Bewegungsstrecke geben. Zu diesem Zweck wird das analoge Ankerstromsignal digitalisiert, um eine entsprechende Zählung vomehmen zu können.

Da vorbekannt ist, über wie viele Stromrippel der Gleichstrommotor sich drehen muß, bis die Strecke zwischen den beiden, die Bewegungsstrecke begrenzenden Blockpositionen zurückgelegt ist, kann über die Zählung der Stromrippel eine Positioniensbestimmung des angetriebenen Elements erfolgen. Eingesetzt werden derartige Verfahren beispielsweise im Kraftfahrzeugbereich zum Steuern eines Verstellantriebes, wie sie beispielsweise für Fensterheber und/oder Schiebedächer vorgesehen sind. Ein wesentliches Element in der Erfassung der Position beispielsweise der Scheibe ist diejenige beim Schließen derselben, bei der der Einklemmschutz abgeschaltet werden kann. Eine solche Abschaltung ist notwendig, damit die Scheibe vollständig in ihren oberen Block und in die dort vorgesehenen Dichtungen einfahren kann, ohne daß infolge der erhöhten Last eine Motorabschaltung erfolgt. Bei einer fehlerhaften Zählung der Stromrippel zur Bestimmung der Position der Scheibe kann es vorkommen, daß der Einklemmschutz zu früh oder zu spät abgeschaltet wird.

Zur Erhöhung der Bestimmung der Positionsgenauigkeit des beweglichen Elements, beispielsweise einer Fensterscheibe eines Kraftfahrzeuges erfolgt eine systemseitige Normierung bzw. Renormierung, wenn das Fenster in seine obere Blockposition eingefahren worden ist, da nunmehr eine tatsächliche Übereinstimmung der IST-Position der Scheibe und der mechanisch definierten Blockposition gegeben ist. Durch diese Renormierung wird der Stromrippelzähler wieder auf null zurückgesetzt, damit eine Fehleraddition über einen längeren Zeitraum verhindert ist.

Durch die US 5,483,135 ist ein Verfahren zur Steuerung eines elektromotorisch verstellbaren Fahrzeugfensters bekannt geworden, bei dem ein Positionszähler durch Zählung der inkrementalen Signale eines Hall-Elements die jeweilige Position des Fensters während eines Verstellvorganges erfaßt. Zusätzlich wird durch eine Kontrolleinrichtung der Strom des Antriebsmotors gemessen. Wenn dieser Motorstrom das Einfahren des Fensters in seine obere oder untere Blockposition anzeigt, wird der Motor abgeschaltet, und der Positionszähler unabhängig von seinem aktuellen Wert auf den Wert der tatsächlichen Blockposition zurückgesetzt.

Durch die DE 196 19 971 A1 ist eine Vorrichtung zur Betätigung eines elektromotorisch verstellbaren Schiebedachs oder Fahrzeugfensters offenbart, bei dem die Position dieses Aggregates durch Zählung der Stromrippel des kommutierten Antriebsmotors erfaßt wird. Zur Normierung der Nullstellung des Verstellantriebes wird bei dieser Vorrichtung eine einzigartige Stromvariation verwendet, die in einer vorherbestimmten bekannten Position des angetriebenen Teils auftritt. Diese Normierung wird immer dann vorgenommen, wenn das angetriebene Teil diese bestimmte Position während eines Verstellvorgangs passiert und die entsprechende Stromvariation erkannt wird.

Auch wenn durch derartige Renormierungsmaßnahmen eine genaue Positionsbestimmung des angetriebenen Elements über einen längeren Zeitraum grundsätzlich durchgeführt werden kann, ist eine solche Renormierung jedoch unzureichend, wenn innerhalb derjenigen Zeitspanne, in der sich das angetriebene Element in seiner Blockposition befindet, sich dieses ohne einen Betrieb des Gleichstrommotors bewegt. Dies ist beispielsweise bei solchen Anwendungen der Fall, bei denen zum Antreiben des angetriebenen Elements zwischen dem Gleichstrommotor und dem beweglichen Element mechanische Übertragungsmittel eingesetzt sind, wie etwa bei Verstelleinrichtungen zum Betätigen der Fensterscheiben eines Kraftfahrzeuges. Verbleibt eine solche Fensterscheibe über einen bestimmten Zeitraum in seiner geschlossenen, in der oberen Blockposition befindlichen Stellung, entspannt sich die das Fenster hebende Mechanik um einige Millimeter, insbesondere bei einem Betrieb des Kraftfahrzeuges infolge der auftretenden Vibrationen. Bei einer solchen Bewegung der Scheibe, die nicht aufgrund eines Betriebes des Gleichstrommotors herbeigeführt wird, ist für den weiteren Betrieb die Positionserfassung verfälscht, da sich die IST-Position der Scheibe nicht - wie systemseitig angenommen - während der Normierung in der oberen Blockposition befindet.

Ausgehend von diesem diskutierten Stand der Technik liegt der Erfindung daher die Aufgabe zugrunde, ein eingangs genanntes gattungsgemäßes Verfahren dergestalt weiterzubilden, daß eine sichere Positionsbestimmung des angetriebenen Elements auch dann möglich ist, wenn dieses systemseitig unerkannt aus seiner Blockposition heraus bewegt worden ist.

Diese Aufgabe wird erfindungsgemäß durch ein eingangs genanntes gattungsgemäßes Verfahren gelöst, bei dem ein Ansteuern des Gleichstrommotors zum Einfahren des angetriebenen Elements in die Blockposition bei Vorliegen eines Signals zum Herausfahren des angetriebenen Elements aus einer Blockposition und eine systemseitige Normierung bezüglich der aktuellen Blockposition vorgesehen ist, wenn sich das angetriebene Element innerhalb seiner bestimmungsgemäßen Blockposition befindet, bevor der Gleichstrommotor angesteuert wird, um dem vorliegenden Signal entsprechend das bewegliche Element aus der Blockposition herauszufahren.

Bei dem erfindungsgemäßen Verfahren wird zur Vermeidung einer verfälschten Positionsbestimmung der Scheibe bei einem benutzerseitig gewünschten Herausfahren des angetriebenen Elements aus seiner Blockposition der Gleichstrommotor zunächst angesteuert, um das angetriebene Element zunächst in seine Blockposition einzufahren. Wenn es sichergestellt ist, daß das angetriebene Element sich (wieder) in seiner Blockposition befindet, so daß die IST-Position des angetriebenen Elements der tatsächlichen Blockposition entspricht, wird eine systemseitige (Re)Normierung durchgeführt. Erst wenn diese Normierung abgeschlossen ist, wird der Gleichstrommotor zum Herausfahren des angetriebenen Elements aus seiner Blockposition angesteuert. Die Positionserfassung ist somit mit dem Beginn des Herausfahrens des angetriebenen Elements aus seiner Blockposition erneut in Bezug auf die mögliche Bewegungsstrecke des angetriebenen Elements geeicht. Die nachfolgende Positionserfassung des beweglichen Elements ist daher nicht nur frei von Fehlern vorangegangener Bewegungen, sondern auch frei von Normierungsfehlern infolge von zwischen der registrierten Einfahrbewegung des angetriebenen Elements in seine Blockposition und dem gewünschten Herausfahren eingetretene, jedoch nicht detektierter Bewegungen des angetriebenen Elements.

Eine Detektion, daß sich das angetriebene Element vollständig in seiner Blockposition befindet, kann über eine Auswertung der der Bewegung des Gleichstrommotors entgegenwirkenden Last erfolgen. Femer kann vorgesehen sein, daß der Gleichstrommotor über eine vorbestimmte Zeitspanne zum (erneuten) Einfahren des angetriebenen Elements in die Blockposition angesteuert ist.

Bei einem bevorzugten Ausführungsbeispiel wird der Gleichstrommotor solange zum Einfahren des angetriebenen Elements in die Blockposition angesteuert, bis in dem Ankerstromsignal des Gleichstrommotors keine Stromrippel mehr detektierbar sind. Werden keine Stromrippel mehr detektiert, bewegt sich der Gleichstrommotor trotz Ansteuerung nicht mehr, welcher Zustand eintritt, wenn das angetriebene Element in die Blockposition und somit gegen seinen Endanschlag wirkend eingefahren ist. Zur Erhöhung der Sicherheit kann vorgesehen sein, daß trotzdem über eine vorbestimmte Zeitspanne hinweg der Gleichstrommotor zum Einfahren des angetriebenen Elementes in die Blockposition angesteuert wird.

Das erfindungsgemäße Verfahren eignet sich für Verstellantriebe im Kraftfahrzeug, etwa zum Betätigen von Fensterscheiben, Schiebedächern und/oder Sitzen. Insbesondere bei einem Einsatz zum Betreiben einer als Fensterheber ausgelegten Verstelleinrichtung eignet sich das erfindungsgemäße Verfahren, da durch dieses die Sicherheit hinsichtlich einer exakten Bestimmung desjenigen Punktes, in dem der Einklemmschutz beim Schließen der Scheibe ausgeschaltet werden kann, deutlich erhöht ist.

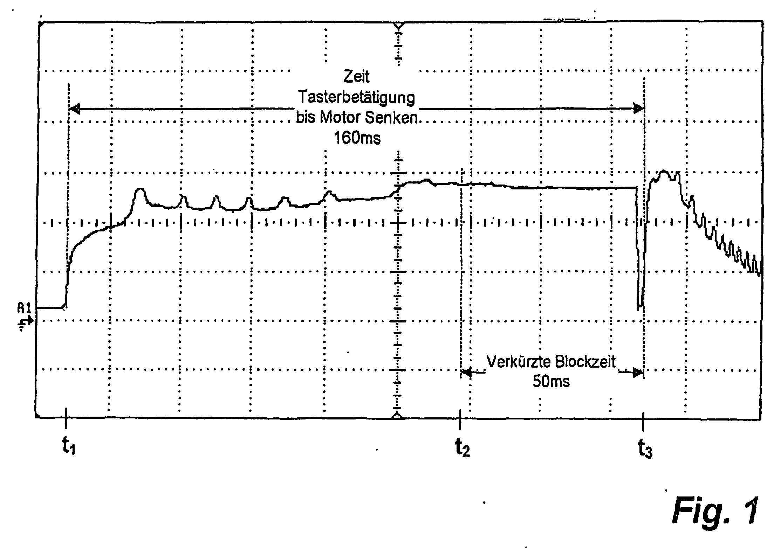

In Figur 1 ist exemplarisch das analoge Rippelsignal des Gleichstrommotors einer solchen als Fensterheber ausgelegten Verstelleinrichtung. Das Fenster ist zuvor in seine obere Blockposition eingefahren worden und in dieser Position über eine bestimmte Zeit verblieben. Daher beginnt das analoge Ankerstromsignal auf Nullniveau. Im Zeitpunkt t₁ wird systemseitig der Wunsch eines Bedieners erkannt, die Fensterscheibe erneut zu öffnen. Der Gleichstrommotor der Verstelleinrichtung wird im Zeitpunkt t₁ derart bestromt, daß durch diesen das Fenster in seine Blockposition eingefahren wird. Eine Drehung des Ankers des Gleichstrommotors wird durch eine Detektion mehrerer Stromrippel erkannt. Im Zeitpunkt t₂ ist festgestellt worden, daß sich der Gleichstrommotor bzw. sein Anker infolge fehlender Stromrippel nicht mehr dreht. Gleichwohl ist bei dem dargestellten Ausführungsbeispiel zur Sicherheit vorgesehen, daß der Gleichstrom noch über eine vorbestimmte Zeitspanne - hier 50 ms - in dieser Richtung bestromt ist. Es erfolgt anschließend eine (Re)Normierung des Systems, so daß beim anschließenden Ansteuern des Gleichstrommotors, um nunmehr tatsächlich die Scheibe aus dieser Blockposition herauszufahren, eine Stromrippelzählung ausgehend von einer mit der Blockposition übereinstimmenden IST-Position der Fensterscheiber erfolgen kann. Der Zeitpunkt des Umschaltens des Gleichstrommotors erfolgt zu dem in dem Diagramm mit t₃ bezeichneten Zeitpunkt. Die gesamte Dauer der Nachnormierung bis zum Beginn der Herausfahrens der Fensterscheibe aus der Blockposition ist bei dem dargestellten Ausführungsbeispiel mit 160 ms angegeben - einer Zeitspanne, die von einem Benutzer nicht als Verzögerung registrierbar ist.

## Patentansprüche

1. Verfahren zum Bestimmen der Position eines durch die Antriebswelle eines Gleichstrommotors angetriebenen Elements innerhalb einer vorbestimmten Bewegungsstrecke zwischen zwei Blockpositionen durch Auswerten der im Ankerstromsignal enthaltenen Stromrippel, bei dem bei einer Bewegung des angetriebenen Elements in eine Blockposition eine Normierung bezüglich der Blockposition durchgeführt wird, **gekennzeichnet durch** ein Ansteuern des Gleichstrommotors zum Einfahren des angetriebenen Elements in die Blockposition bei Vorliegen eines Signals zum Herausfahren des angetriebenen Elements aus einer Blockposition und eine systemseitige Normierung bezüglich der aktuellen Blockposition, wenn sich das angetriebene Element innerhalb seiner bestimmungsgemäßen Blockposition befindet, bevor der Gleichstrommotor angesteuert wird, um dem vorliegenden Signal entsprechend das bewegliche Element aus der Blockposition herauszufahren.

2. Verfahren nach Anspruch 1, **dadurch gekennzeichnet, daß** der Gleichstrommotor über eine vorbestimmte Zeitspanne hinweg zum Einfahren des angetriebenen Elements in die Blockposition angesteuert wird.

3. Verfahren nach Anspruch 1, **dadurch gekennzeichnet, daß** der Gleichstrommotor solange zum Einfahren des angetriebenen Elements in die Blockposition angesteuert wird, bis im Stromrippeisignal keine Stromrippel mehr detektierbar sind.

4. Verfahren nach Anspruch 3, **dadurch gekennzeichnet, daß** vor einer Ansteuerung des Gleichstrommotors zum Herausfahren des angetriebenen Elements aus der Blockposition der Gleichstrommotor eine vorbestimmte Zeitspanne über eine vorbestimmte Zeitspanne hinweg weiterhin zum Einfahren des angetriebenen Elements in die Blockposition angesteuert wird.

5. Verwendung des Verfahrens nach einem der Ansprüche 1 bis 4 im Rahmen einer Positionserfassung eines über eine Verstelleinrichtung in einem Kraftahrzeug angetriebenen Elementes, etwa einer Fensterscheibe, einem Schiebedach oder einem Sitz.

## Claims

1. Process for determining the position of an element driven within a predetermined path of movement between two block positions by the primary shaft of a d.c. motor as a result of evaluating the current ripples comprised in the armature current signal, in the course of which process a normalisation in respect of the block position is carried out if there is a movement of the powered element into a block position, **characterised by** an actuation of the d.c. motor for the purpose of travelling the powered element into the block position if there is a signal to travel the powered element out of a block position, and by a normalisation by the system in respect of the current block position if the powered element is within its designated block position prior to the d.c. motor being actuated, in order to travel the moveable element from the block position in accordance with the applied signal.

2. Process in accordance with Claim 1, **characterised by** the fact that the d.c. motor is actuated beyond a pre-specified time span for the purpose of driving the powered element into the block position.

3. Process in accordance with Claim 1, **characterised by** the fact that the d.c. motor is actuated to drive the powered element into the block position until no more current ripples are detectable in the current ripple signal.

4. Process in accordance with Claim 3, **characterised by** the fact that prior to an actuation of the d.c. motor to travel the powered element out of the block position, the d.c. motor is further actuated for a pre-specified time span beyond a predetermined time span in order to travel the powered element into the block position.

5. Application of the process in accordance with any of Claims 1 to 4 within the scope of a detection of the position of an element that is driven by means of an adjustment device in a motor vehicle, for instance a window, a sliding roof or a seat.

## Revendications

1. Procédé pour déterminer la position d'un élément entraîné par l'arbre de commande d'un moteur à courant continu à l'intérieur d'un segment de trajet prédéterminé, entre deux positions de blocage, par l'évaluation des ripples de courant contenues dans le signal de courant d'induit, dans lequel, lors d'un mouvement de l'élément entraîné dans une position de blocage, un calibrage concernant la position de blocage est exécuté, **caractérisé par** une excitation du moteur à courant continu pour amener l'élément entraîné dans la position de blocage en présence d'un signal de sortie dudit élément entraîné hors d'une position de blocage, et par un calibrage de la part du système, concernant la position de blocage actuelle, lorsque l'élément entraîné se trouve dans sa position de blocage conforme à la détermination, avant que le moteur à courant continu soit excité, afin de sortir l'élément mobile de la position de blocage, conformément au signal présent.

2. Procédé selon la revendication 1, **caractérisé en ce que** le moteur à courant continu est excité pendant un laps de temps prédéterminé pour amener l'élément entraîné dans la position de blocage.

3. Procédé selon la revendication 1, **caractérisé en ce que** le moteur à courant continu est excité, pour amener dans la position de blocage l'élément entraîné, jusqu'à ce qu'aucune ripple de courant ne soit détecté dans le signal.

4. Procédé selon la revendication 3, **caractérisé en ce que**, avant une excitation du moteur à courant continu pour faire sortir de la position de blocage l'élément entraîné, le moteur à courant continu est encore excité pendant un laps de temps prédéterminé, au-delà d'un laps de temps prédéterminé, pour amener dans la position bloquée l'élément entraîné..

5. Utilisation du procédé selon l'une des revendications 1 à 4 dans le cadre d'une détection de position d'un élément, tel qu'une vitre, un toit ouvrant ou un siège, entraîné, dans un véhicule automobile, par l'intermédiaire d'un actionneur.
